(19) Europäisches Patentamt
European Patent Office
Office européen des brevets

(11) **EP 4 712 197 A1**

(12) **EUROPEAN PATENT APPLICATION**

(43) Date of publication:
**18.03.2026 Bulletin 2026/12**

(21) Application number: **25198945.5**

(22) Date of filing: **29.08.2025**

(51) International Patent Classification (IPC):
*H01M 10/0587* (2010.01)  *H01M 10/0525* (2010.01)
*H01M 50/434* (2021.01)  *H01M 50/449* (2021.01)
*H01M 50/451* (2021.01)  *H01M 50/457* (2021.01)
*H01M 50/46* (2021.01)  *H01M 50/491* (2021.01)

(52) Cooperative Patent Classification (CPC):
**H01M 10/0525; H01M 10/0587; H01M 50/434;
H01M 50/449; H01M 50/451; H01M 50/457;
H01M 50/461; H01M 50/491;** Y02E 60/10;
Y02P 70/50

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.08.2024 CN 202411216668**

(71) Applicant: **Ningde Amperex Technology Ltd.
Ningde City, Fujian Province 352100 (CN)**

(72) Inventor: **YAO, Meina
Ningde City, Fujian Province 352100 (CN)**

(74) Representative: **Icosa
83 avenue Denfert-Rochereau
75014 Paris (FR)**

(54) **SECONDARY BATTERY AND ELECTRICAL APPARATUS**

(57) A secondary battery includes an electrode assembly (100). The electrode assembly (100) is of a wound structure and includes a positive electrode plate (40), a negative electrode plate (30), a first separator (10), and a second separator (20). The negative electrode plate (30) is provided between the first separator (10) and the second separator (20). The first separator (10) includes an aqueous bonding layer (12), and the second separator (20) includes an oily bonding layer (22). The aqueous bonding layer (12) includes a first binder, and the oily bonding layer (22) includes a second binder.

FIG. 2

**Description**

**TECHNICAL FIELD**

This application relates to the technical field of electrochemistry, and in particular, to a secondary battery and an electrical apparatus.

**BACKGROUND**

A secondary battery, e.g., a lithium-ion battery, has the advantages of high energy density, long cycle life, low self-discharge rate, environmental friendliness, no pollution, etc., and thus has been widely used in the fields such as aviation, aerospace, navigation, or electric vehicles. The performance of a separator in the lithium-ion battery determines an interface structure, internal resistance, or the like of the lithium-ion battery, which directly affects the capacity, cycle, and safety performance of the lithium-ion battery. Separators with excellent performance play an important role in improving the overall performance of the lithium-ion battery. At present, when the performance of the lithium-ion battery is improved by means of the separator, it is usually difficult to achieve the cycle performance and safety performance of the lithium-ion battery concurrently.

**SUMMARY**

An objective of this application is to provide a secondary battery and an electrical apparatus to achieve cycle performance and the safety performance of the secondary battery concurrently. Specific technical solutions are as follows:

It is hereby noted that in the summary of this application, this application is construed by using a lithium-ion battery as an example of the secondary battery, but the secondary battery of this application is not limited to the lithium-ion battery. Specific technical solutions are as follows:

A first aspect of this application provides a secondary battery, including an electrode assembly of a wound structure. The electrode assembly includes a positive electrode plate, a negative electrode plate, a first separator, and a second separator. The negative electrode plate is provided between the first separator and the second separator. The negative electrode plate includes a negative current collector as well as a first negative electrode material layer and a second negative electrode material layer provided on the two sides of the negative current collector in a thickness direction thereof. The first separator is adjacent to the first negative electrode material layer, and the second separator is adjacent to the second negative electrode material layer. The first separator includes a first base film and an aqueous bonding layer. The aqueous bonding layer is provided on at least one side of the first base film. The aqueous bonding layer comes into direct contact with the first negative electrode material layer. The second separator includes a second base film and an oily bonding layer. The oily bonding layer is provided on at least one side of the second base film. The oily bonding layer comes into direct contact with the second negative electrode material layer. The first separator has a good ionic conductivity and relatively low bonding performance, which is conducive to reducing the problem of a lack of electrolyte solution that occurs in a later stage of cycling of the secondary battery, and in turn, conducive to improving the cycle performance of the secondary battery. The second separator has good bonding performance and a high puncture resisting capacity, which is conducive to improving the safety performance of the secondary battery. Therefore, using the first separator and the second separator in conjunction is conducive to achieving the cycle performance and the safety performance of the secondary battery concurrently.

In some embodiments of this application, the first separator further includes a first ceramic coating layer. The first ceramic coating layer is provided on a side that is of the first base film and that is oriented away from the first negative electrode material layer. The first ceramic coating layer is provided between the first base film and the aqueous bonding layer. And/or, the second separator further includes a second ceramic coating layer. The second ceramic coating layer is provided on a side that is of the second base film and that is oriented away from the second negative electrode material layer. The second ceramic coating layer is provided between the second base film and the oily bonding layer. The introduction of the first ceramic coating layer and/or the second ceramic coating layer can further improve the cycle performance of the secondary battery. Therefore, using the above first separator and second separator in conjunction is more conducive to achieving the cycle performance and the safety performance of the secondary battery concurrently.

In some embodiments of this application, along a winding direction of the electrode assembly, a length of the first negative electrode material layer is greater than a length of the second negative electrode material layer. The length of the first negative electrode material layer being greater than the length of the second negative electrode material layer is conducive to allowing the negative electrode plate of the secondary battery to absorb more electrolyte solution to reduce the risks such as a lack of electrolyte solution in cycles.

In some embodiments of this application, the electrode assembly includes a straight region and a curved region. In the curved region, a curved segment of the positive electrode plate is adjacent to a curved segment of the first negative electrode material layer. The curved segment of the positive electrode plate is farther away from a winding center of the electrode assembly than the curved segment of the first negative electrode material layer. The first separator is provided between the curved segment of the positive electrode plate and the curved segment of the first negative electrode material layer. In the electrode assembly, by using the first separator and the second separator with different characteristics in conjunction to exert their own different advantages, it is conducive to alleviating the lithium plating problem and the interface problem of the secondary battery in the curved region, and further improving the cycle performance of the secondary battery, so as to achieve the cycle performance and the safety performance of the secondary battery concurrently.

In some embodiments of this application, the aqueous bonding layer includes one or more selected from the group consisting of aqueous polyvinylidene difluoride, polytetrafluoroethylene, styrene-butadiene rubber and aqueous poly(styrene-co-acrylate). And/or, the oily bonding layer includes one or more selected from the group consisting of oily polyvinylidene difluoride, polyvinylidene fluoride and a polyvinylidene fluoride-hexafluoropropylene copolymer. By selecting the above materials, it is conducive to increasing bonding forces and strengthening interfaces between the first separator and the positive electrode plate, between the first separator and the negative electrode plate, between the second separator and the positive electrode plate, as well as between the second separator and the negative electrode plate, and in turn, conducive to transmission of lithium ions, thereby improving the cycle performance of the secondary battery. Moreover, the possibility of peel-off of the first ceramic coating layer and the second ceramic coating layer is reduced. Therefore, it is more conducive to achieving the cycle performance and the safety performance of the secondary battery concurrently.

In some embodiments of this application, a coating weight CW1 of the aqueous bonding layer is 0.0004 mg/mm$^2$ to 0.002 mg/mm$^2$, and/or, a coating weight CW2 of the oily bonding layer is 0.0004 mg/mm$^2$ to 0.002 mg/mm$^2$. By adjusting and controlling CW1 and/or CW2 within the ranges of this application, it is conducive to strengthening interfaces between the first separator and the positive electrode plate and/or the negative electrode plate and interfaces between the second separator and the positive electrode plate and/or the negative electrode plate, and in turn, conducive to the transmission of the lithium ions, which can further improve the cycle performance of the secondary battery.

In some embodiments of this application, a porosity P1 of the first base film is greater than a porosity P2 of the second base film, where $40\% \leq P1 \leq 70\%$, and $5\% \leq P2 \leq 50\%$. In some embodiments of this application, $50\% \leq P1 \leq 60\%$, and $10\% \leq P2 \leq 40\%$. By adjusting and controlling the porosity P1 of the first base film and the porosity P2 of the second base film within the ranges of this application, the first separator and the second separator have a high mechanical strength, which can further achieve the safety performance of the secondary battery concurrently.

In some embodiments of this application, a pore size D1 of the first base film is greater than a pore size D2 of the second base film, $80\,nm \leq D1 \leq 700\,nm$, and $50\,nm \leq D2 \leq 200\,nm$. In some embodiments of this application, $250\,nm \leq D1 \leq 520\,nm$, and $100\,nm \leq D2 \leq 150\,nm$. By adjusting and controlling the pore size D1 of the first base film and the pore size D2 of the second base film within the ranges of this application, the first separator and the second separator have a high mechanical strength, which can further achieve the safety performance of the secondary battery concurrently.

In some embodiments of this application, a coating weight CW1' of the first ceramic coating layer is 7 mg/cm$^2$ to 13 mg/cm$^2$, and a coating weight CW2' of the second ceramic coating layer is 7 mg/cm$^2$ to 13 mg/cm$^2$. By adjusting and controlling CW1' and/or CW2' within the above ranges, it is conducive to increasing solution retention rates of the first separator and/or the second separator, such that the solution storage performance of the first separator and/or the second separator is improved, which is conducive to further achieving the cycle performance of the secondary battery concurrently.

In some embodiments of this application, the first ceramic coating layer includes first ceramic particles, and the second ceramic coating layer includes second ceramic particles. The first ceramic particles and the second ceramic particles each independently include one or more selected from the group consisting of aluminum oxide, boehmite, silicon oxide, magnesium oxide, titanium oxide, tin oxide, calcium oxide, zirconium oxide, yttrium oxide, silicon carbide, aluminum hydroxide, magnesium hydroxide and calcium hydroxide. The type of the first ceramic particles in the first ceramic coating layer and the type of the second ceramic particles in the second ceramic coating layer are within the range of this application, which can further improve the solution retention capacity of the first separator and the second separator and alleviate the interface problem of the positive electrode plate and the negative electrode plate caused by insufficient electrolyte solution, thereby further improving the cycle performance of the secondary battery.

In some embodiments of this application, a thickness of the first separator H1 is in a range of 7.5 μm to 15.0 μm, and a thickness of the second separator H2 is in a range of 6.0 μm to 13.0 μm. By adjusting and controlling the thickness H1 of the first separator and the thickness H2 of the second separator within the above ranges, the obtained secondary battery has a high energy density and can also achieve the cycle performance and the safety performance concurrently.

A second aspect of this application provides an electrical apparatus, including the secondary battery according to any one of the foregoing embodiments.

Beneficial effects of this application are as follows:

This application provides a secondary battery, including an electrode assembly of a wound structure. The electrode assembly includes a positive electrode plate, a negative electrode plate, a first separator, and a second separator. The negative electrode plate is provided between the first separator and the second separator. The negative electrode plate includes a negative current collector as well as a first negative electrode material layer and a second negative electrode material layer provided on the two sides of the negative current collector in a thickness direction thereof. The first separator is adjacent to the first negative electrode material layer, and the second separator is adjacent to the second negative electrode material layer. The first separator includes a first base film and an aqueous bonding layer. The aqueous bonding layer is provided on at least one side of the first base film. The aqueous bonding layer comes into direct contact with the first negative electrode material layer. The second separator includes a second base film and an oily bonding layer. The oily bonding layer is provided on at least one side of the second base film. The oily bonding layer comes into direct contact with the second negative electrode material layer. The first separator includes two aqueous bonding layers. The second separator includes two oily bonding layers. The oily bonding layers have a higher bonding force than the aqueous bonding layers. The aqueous bonding layers have a higher ionic conductivity than the oily bonding layers. Therefore, the first base film has a good ionic conductivity and relatively low bonding performance, which is conducive to reducing the problem of a lack of electrolyte solution that occurs in a later stage of cycling of the battery cell, and in turn, conducive to improving the cycle performance of the secondary battery. The second base film has good bonding performance and a high puncture resisting capacity, which is conducive to improving the safety performance of the secondary battery. Therefore, using the first separator and the second separator in conjunction is conducive to achieving the cycle performance and the safety performance of the secondary battery concurrently.

Definitely, a single product or method in which the technical solution of this application is implemented does not necessarily achieve all of the above advantages concurrently.

**BRIEF DESCRIPTION OF DRAWINGS**

To describe the technical solutions in some embodiments of this application or the prior art more clearly, the following outlines the drawings to be used in the description of some embodiments of this application or the prior art. Evidently, the drawings outlined below merely illustrate some embodiments of this application, and a person of ordinary skill in the art may derive other embodiments from the drawings.

FIG. 1 is a schematic structural diagram of a cross section along a thickness direction of an electrode assembly of a wound structure formed by winding along a W direction according to an embodiment of this application;
FIG. 2 is a schematic structural diagram of a cross section along a thickness direction of an unwound electrode assembly according to another embodiment of this application;
FIG. 3 is a schematic structural diagram of a cross section along a thickness direction of the unwound electrode assembly according to an embodiment of this application; and
FIG. 4 is a close-up view of a position A shown in FIG. 1.

**DETAILED DESCRIPTION**

The following describes the technical solutions in some embodiments of this application clearly in detail with reference to the drawings appended hereto. Evidently, the described embodiments are merely a part of but not all of the embodiments of this application. All other embodiments derived by a person skilled in the art based on this application still fall within the protection scope of this application.

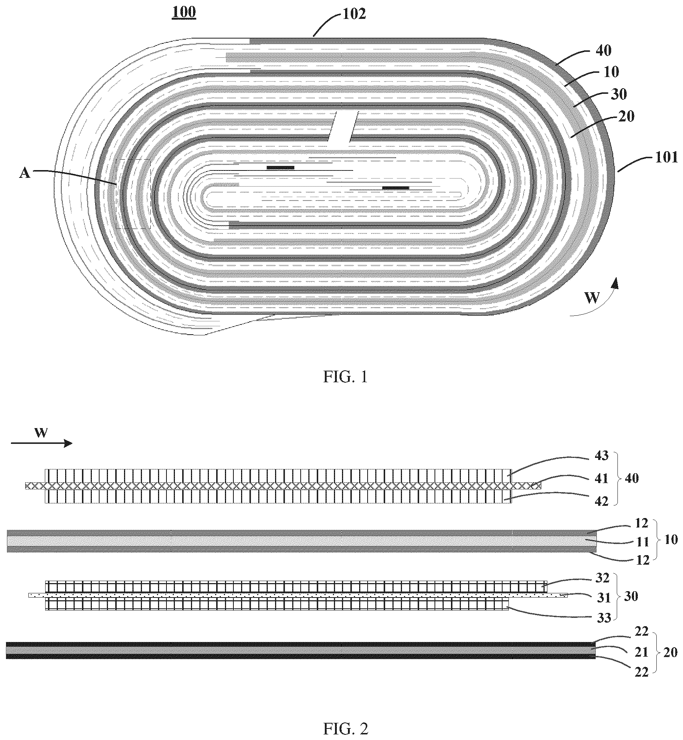

A first aspect of this application provides a secondary battery, including an electrode assembly of a wound structure. Specifically, as shown in FIG. 1, the electrode assembly 100 is of the wound structure. The electrode assembly 100 includes a first separator 10, a second separator 20, a negative electrode plate 30, and a positive electrode plate 40. The electrode assembly 100 further includes a straight region 102 and a curved region 101. In this application, the straight region is a straight part in the electrode assembly, and the curved region is a curved part in the electrode assembly.

As shown in FIG. 2, the electrode assembly 100 includes a first separator 10, a second separator 20, a negative electrode plate 30, and a positive electrode plate 40. The negative electrode plate 30 is provided between the first separator 10 and the second separator 20. The negative electrode plate 30 includes a negative current collector 31 as well as a first negative electrode material layer 32 and a second negative electrode material layer 33 provided on the two sides of the negative current collector 31 in a thickness direction thereof. The first separator 10 is adjacent to the first negative electrode material layer 32, and the second separator 20 is adjacent to the second negative electrode material layer 33. The first separator 10 includes a first base film 11 and aqueous bonding layers 12. The aqueous bonding layers 12 are provided on the two sides of the first base film 11. That is, the first separator 10 includes two aqueous bonding layers 12, and one of the aqueous bonding layers 12 comes into direct contact with the first negative electrode material layer 32. The second separator 20 includes a second base film 21 and oily bonding layers 22. The oily bonding layers 22 are provided on the two sides of the second base film 21. That is, the second separator 20 includes two oily bonding layers 22, and one of the oily bonding layers 22 comes into direct contact with the second negative electrode material layer 33. The positive electrode plate 40 includes a positive current collector 41 and positive electrode material layers provided on two surfaces of the positive current collector 41. The positive electrode material layers include a first positive electrode material layer 42 and a second positive electrode material layer 43. Understandably, an aqueous bonding layer 12 may also be provided on one side of the first base film 11. That is, the first separator 10 includes one aqueous bonding layer 12, and the aqueous bonding layer 12 comes into direct contact with the first negative electrode material layer 32. An oily bonding layer 22 is provided on one side of the second base film 21. That is, the second separator 20 includes one oily bonding layer 22, and the oily bonding layer 22 comes into direct contact with the second negative electrode material layer 33.

As found by the applicant through research, in this application, by selecting the above first separator 10 and second separator 20 to be used in conjunction, it is conducive to exerting the advantages of each layer, thereby achieving the cycle performance and the safety performance of the secondary battery concurrently. Specifically, the first separator 10 includes aqueous bonding layers 12. The second separator includes oily bonding layers 22. The oily bonding layers 22 have a higher bonding force than the aqueous bonding layers 12. The aqueous bonding layers 12 have a higher ionic conductivity than the oily bonding layers 22. Therefore, the first base film 11 has a good ionic conductivity and relatively low bonding performance, which is conducive to reducing the problem of a lack of electrolyte solution that occurs in a later stage of cycles, and in turn, conducive to improving the cycle performance of the secondary battery. The second base film 21 has good bonding performance and a high puncture resisting capacity, which is conducive to improving the safety performance of the secondary battery. Therefore, using the first separator 10 and the second separator 20 in conjunction is conducive to achieving the cycle performance and the safety performance of the secondary battery concurrently.

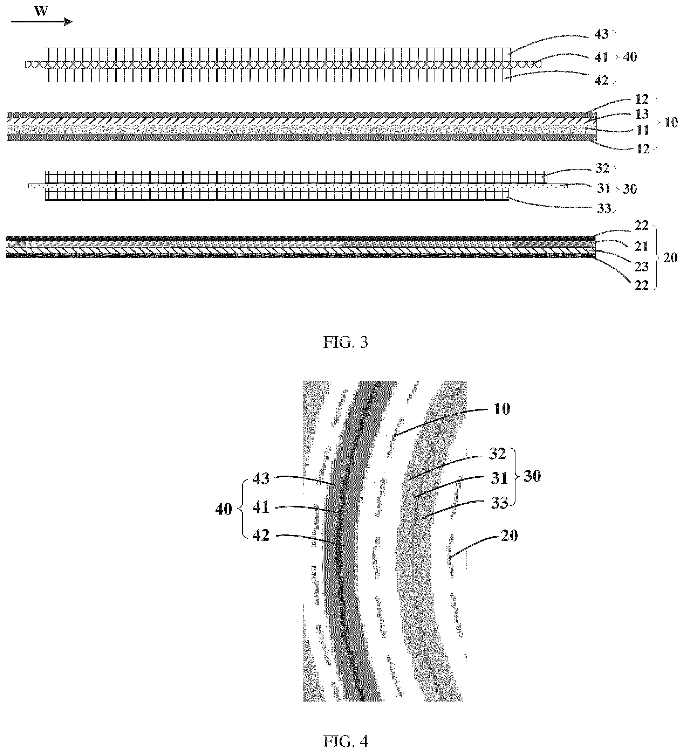

In this application, the aqueous bonding layer refers to a bonding layer prepared with an aqueous binder as a main material, and has the characteristics of good corrosion resistance and relatively rough surfaces. The oily bonding layer refers to a bonding layer prepared with an oily binder as a main material, and has the characteristics of good oil resistance, smooth surfaces, etc. The aqueous binder refers to a binder with a hydrophilic property, and the oily binder refers to a binder with a lipophilic property. In some embodiments of this application, as shown in FIG. 3, the electrode assembly 100 includes a first separator 10, a second separator 20, a negative electrode plate 30, and a positive electrode plate 40. The negative electrode plate 30 is provided between the first separator 10 and the second separator 20. The negative electrode plate 30 includes a negative current collector 31 as well as a first negative electrode material layer 32 and a second negative electrode material layer 33 provided on the two sides of the negative current collector 31 in a thickness direction thereof. The first separator 10 is adjacent to the first negative electrode material layer 32, and the second separator 20 is adjacent to the second negative electrode material layer 33. The first separator 10 includes a first base film 11, aqueous bonding layers 12, and a first ceramic coating layer 13. The aqueous bonding layers 12 are provided on the two sides of the first base film 11. The first ceramic coating layer 13 is provided on a side that is of the first base film 11 and that is oriented away from the first negative electrode material layer 32. The first ceramic coating layer 13 is provided between the first base film 11 and the corresponding aqueous bonding layer 12. That is, the first separator 10 includes two aqueous bonding layers 12 and one first ceramic coating layer 13. Moreover, one of the aqueous bonding layers 12 comes into direct contact with the first negative electrode material layer 32. The second separator 20 includes a second base film 21, oily bonding layers 22, and a second ceramic coating layer 23. The oily bonding layers 22 are provided on the two sides of the second base film 21. The second ceramic coating layer 23 is provided on a side that is of the second base film 21 and that is oriented away from the second negative electrode material layer 33. The second ceramic coating layer 23 is provided between the second base film 21 and the corresponding oily bonding layer 22. That is, the second separator 20 includes two oily bonding layers 22 and one second ceramic coating layer 23. Moreover, one of the oily bonding layers 22 comes into direct contact with the second negative electrode material layer 33. The positive electrode plate 40 includes a positive current collector 41 and positive electrode material layers provided on two surfaces of the positive current collector 41. The positive electrode material layers include a first positive electrode material layer 42 and a second positive electrode material layer 43.

In some embodiments of this application, the first separator 10 includes one aqueous bonding layer 12 and one first ceramic coating layer 13. The aqueous bonding layer 12 comes into direct contact with the first negative electrode material layer 32. The first ceramic coating layer 13 is provided on a side that is of the first base film 11 and that is oriented away from the first negative electrode material layer 32. The second separator 20 includes one oily bonding layer 22 and one second ceramic coating layer. The oily bonding layer 22 comes into direct contact with the second negative electrode material layer 33. The second ceramic coating layer 23 is provided on a side that is of the second base film 21 and that is oriented away from the second negative electrode material layer 33.

As shown in FIG. 1 and FIG. 3, in a wound coil of the electrode assembly 100, the positive electrode plate 40 is farther away from a winding center of the electrode assembly 100 than the negative electrode plate 30, and the first negative electrode material layer 32 is closer to the positive electrode plate 40 than the second negative electrode material layer 33. Therefore, the first negative electrode material layer 32 is closer to the outer side of the electrode assembly 100 than the second negative electrode material layer 33. In a wound coil of the electrode assembly 100, the first negative electrode material layer 32 on the outer side is wrapped with the positive electrode plate 40. A winding radius of the positive electrode plate 40 is larger than that of the first negative electrode material layer 32. A cell balance, denoted as CB, which is a ratio of a capacity per unit area of a negative electrode to a capacity per unit area of a positive electrode, of the first negative electrode material layer 32 is relatively small. One side of the first negative electrode material layer 32 is more prone to lithium plating, and is also more prone to an interface problem than one side of the second negative electrode material layer 33 on the inner side. Based on this, the first ceramic coating layer 13 is additionally provided on a side that is of the first separator 10 and that is close to the positive electrode plate 40, which is conducive to improving the solution retention capacity of the side that is of the first separator 10 and that is close to the positive electrode plate 40, and in turn, conducive to alleviating the problem of lithium plating and the interface problem of one side of the first negative electrode material layer 32, thereby further improving the cycle performance of the secondary battery. In the entire wound structure of the electrode assembly 100, there is a direct contact between the second positive electrode material layer 43 and the second separator 20. Due to the risk of short circuit caused by detachment of coating of the second positive electrode material layer 43, in the wound structure, a side that is of the second separator 20 and that is close to the second positive electrode material layer 43 is provided with the second ceramic coating layer 23. The second ceramic coating layer 23 has a high solution retention rate, which can reduce the probability of the risk of short circuit caused by the detachment of coating of the second positive electrode material layer 43, thereby helping to further improve the safety performance of the secondary battery. Additionally, the second ceramic coating layer 23 also has good infiltration performance, which can promote transmission of an electrolyte solution during the cycling process, thereby helping to further improve the cycle performance of the secondary battery. Therefore, in the electrode assembly 100, by using the first separator 10 and the second separator 20 with different characteristics in conjunction to exert their own different advantages, the cycle performance and the safety performance of the secondary battery can be achieved concurrently.

In some embodiments of this application, as shown in FIG. 3 and FIG. 4, in the curved region 101 of the electrode assembly 100, a curved segment of the positive electrode plate 40 is adjacent to a curved segment of the first negative electrode material layer 32. The curved segment of the positive electrode plate 40 is farther away from a winding center of the electrode assembly 100 than the curved segment of the first negative electrode material layer 32. The first separator 10 is provided between the curved segment of the positive electrode plate 40 and the curved segment of the first negative electrode material layer 32. That is, in a curved segment of a wound coil of the electrode assembly 100, the positive electrode plate 40 is farther away from the winding center of the electrode assembly 100 than the negative electrode plate 30, and the first negative electrode material layer 32 is closer to the positive electrode plate 40 than the second negative electrode material layer 33. Therefore, the first negative electrode material layer 32 is closer to the outer side of the electrode assembly 100 than the second negative electrode material layer 33. In a curved segment of a wound coil of the electrode assembly 100, the first negative electrode material layer 32 on the outer side is wrapped with the positive electrode plate 40. A winding radius of the positive electrode plate 40 is larger than that of the first negative electrode material layer 32. A cell balance (CB) of the first negative electrode material layer 32 is relatively small. One side of the first negative electrode material layer 32 is more prone to lithium plating, and is also more prone to the interface problem than one side of the second negative electrode material layer 33 on the inner side. Moreover, the curved region 101 is more prone to lithium plating and the interface problem than the straight region 102. Based on this, the first ceramic coating layer 13 is additionally provided on a side that is of the first separator 10 and that is close to the positive electrode plate 40, which is conducive to improving the solution retention capacity of the side that is of the first separator 10 and that is close to the positive electrode plate 40, and in turn, conducive to alleviating the problem of lithium plating and the interface problem of one side of the first negative electrode material layer 32 in the curved region 101. In the entire wound structure of the electrode assembly 100, there is a direct contact between the second positive electrode material layer 43 and the second separator 20. Since the curved region 101 is more prone to the problem of detachment of coating than the straight region 102, that is, the second positive electrode material layer 43 in the curved region 101 has a higher risk of short circuit caused by the detachment of coating, in the curved region 101 of the wound structure, the side that is of the second separator 20 and that is close to the second positive electrode material layer 43 is provided with the second ceramic coating layer 23. The second ceramic coating layer 23 has a high solution retention rate, which can reduce the probability of the risk of short circuit caused by the detachment of coating of the second positive electrode material layer 43 in the curved region 101, thereby helping to further improve the safety performance of the secondary battery. Additionally, the second ceramic coating layer 23 also has good infiltration performance, which can promote the transmission of the electrolyte solution during the cycling process, and can also reduce the risk of a lack of the electrolyte solution in a region that is near the second positive electrode material layer 43 and that is in the curved region 101, thereby helping to further improve the cycle performance of the secondary battery. Therefore, in the electrode assembly 100, by using the first separator 10 and the second separator 20 with different characteristics in conjunction to exert their own different advantages, it is conducive to improving the lithium plating problem and the interface problem of the secondary battery in the curved region 101, and further improving the cycle performance of the secondary battery, so as to achieve the cycle performance and the safety performance of the secondary battery concurrently.

In some embodiments of this application, as shown in FIG. 2 and FIG. 3, along a winding direction W of the electrode assembly 100, a length of the first negative electrode material layer 32 is greater than a length of the second negative electrode material layer 33. Additionally, along the winding direction W, one end of the first negative electrode material layer 32 is flush with one end of the second negative electrode material layer 33, and an extension length of the other end of the first negative electrode material layer 32 is larger than that of the second negative electrode material layer 33. Understandably, when the length of the first negative electrode material layer 32 is larger than the length of the second negative electrode material layer 33, it is also possible that extension lengths of both the end along the winding direction W and the other end opposite to the winding direction W of the first negative electrode material layer 32 are larger than those of the second negative electrode material layer 33. Arranged in this way, when the first separator 10 is provided on one side of the first negative electrode material layer 32 of the negative electrode plate 30, it is conducive to allow the negative electrode plate 30 of the secondary battery to absorb more electrolyte solution, which reduces the risk of lithium plating on an interface between the electrolyte solution and the negative electrode plate 30 caused by a lack of the electrolyte solution in a later stage of cycles of the secondary battery. The length difference between the first negative electrode material layer and the second negative electrode material layer is not particularly limited in this application, and may be selected according to specific circumstances, as long as the objectives of this application can be achieved.

In some embodiments of this application, the aqueous bonding layer includes an aqueous binder. The aqueous binder includes one or more selected from the group consisting of aqueous polyvinylidene difluoride, polytetrafluoroethylene, styrene-butadiene rubber and aqueous poly(styrene-co-acrylate), and the aqueous bonding layer in this application can be obtained. Moreover, it is conducive to increasing bonding forces between the first separator and the positive electrode plate as well as between the first separator and the negative electrode plate, and strengthening interfaces between the first separator and the positive electrode plate as well as between the first separator and the negative electrode plate, and in turn, conducive to transmission of lithium ions, thereby improving the cycle performance of the secondary battery. Additionally, it is also conducive to reducing the possibility of peel-off of the first ceramic coating layer, thereby improving the safety performance of the secondary battery. The weight-average molecular weight of the aqueous binder is not particularly limited in this application, as long as the objectives of this application can be achieved. For example, the weight-average molecular weight of the aqueous binder may be $1.5 \times 10^4$ to $9 \times 10^6$.

In some embodiments of this application, the coating weight CW1 of the aqueous bonding layer is 0.0004 mg/mm$^2$ to 0.002 mg/mm$^2$. For example, the coating weight CW1 of the aqueous bonding layer may be 0.0004 mg/mm$^2$, 0.0006 mg/mm$^2$, 0.0008 mg/mm$^2$, 0.001 mg/mm$^2$, 0.0012 mg/mm$^2$, 0.0014 mg/mm$^2$, 0.0016 mg/mm$^2$, 0.0018 mg/mm$^2$, 0.002 mg/mm$^2$, or a value falling within a range formed by any two thereof. By adjusting and controlling the coating weight CW1 of the aqueous bonding layer within the range of this application, there are high bonding forces between the first separator and the positive electrode plate and/or the negative electrode plate, which can strengthen interfaces between the first separator and the positive electrode plate and/or the negative electrode plate to facilitate the transmission of the lithium ions, and can further improve the cycle performance of the secondary battery.

In some embodiments of this application, the oily bonding layer includes an oily binder. The oily binder includes one or more selected from the group consisting of oily polyvinylidene difluoride, polyvinylidene fluoride and a polyvinylidene fluoride-hexafluoropropylene copolymer, and the oily bonding layer in this application can be obtained. Moreover, it is conducive to increasing bonding forces between the second separator and the positive electrode plate as well as between the second separator and the negative electrode plate, and strengthening interfaces between the second separator and the positive electrode plate as well as between the second separator and the negative electrode plate, and in turn, conducive to the transmission of the lithium ions, thereby improving the cycle performance of the secondary battery. Additionally, it is also conducive to reducing the possibility of peel-off of the second ceramic coating layer, thereby improving the safety performance of the secondary battery. The weight-average molecular weight of the oily binder is not particularly limited in this application, as long as the objectives of this application can be achieved. For example, the weight-average molecular weight of the oily binder may be $1.5 \times 10^4$ to $9 \times 10^6$. In this application, the oily polyvinylidene difluoride may include, but is not limited to, at least one of a KYNAR PVDF lithium-ion battery binder (Kynar 761A), PVDF5130, or HSV900. The model of Kynar 761A may include, but is not limited to, HSV761, HSV761A, HSV301F, HSV2801, HSVLBG, etc.

As for the aqueous polyvinylidene difluoride and the oily polyvinylidene difluoride, polyvinylidene difluoride has different forms in a water-based solvent or an oil-based organic solvent. In the water-based solvent, the polyvinylidene difluoride is spherical. In the oil-based organic solvent, molecular chains of the polyvinylidene difluoride are opened, and thus the polyvinylidene difluoride has better bonding performance. The aqueous polyvinylidene difluoride and the oily polyvinylidene difluoride may be distinguished by observing the morphology of the binder under a scanning electron microscope (SEM).

In some embodiments of this application, a coating weight CW2 of the oily bonding layer is 0.0004 mg/mm$^2$ to 0.002 mg/mm$^2$. For example, the coating weight CW2 of the oily bonding layer may be 0.0004 mg/mm$^2$, 0.0006 mg/mm$^2$, 0.0008 mg/mm$^2$, 0.001 mg/mm$^2$, 0.0012 mg/mm$^2$, 0.0014 mg/mm$^2$, 0.0016 mg/mm$^2$, 0.0018 mg/mm$^2$, 0.002 mg/mm$^2$, or a value falling within a range formed by any two thereof. By adjusting and controlling the coating weight CW2 of the oily bonding layer within the range of this application, there are high bonding forces between the second separator and the positive electrode plate and/or the negative electrode plate, which can strengthen interfaces between the second separator and the positive electrode plate and/or the negative electrode plate to facilitate the transmission of the lithium ions, and can further improve the cycle performance of the secondary battery.

In one embodiment of this application, the aqueous bonding layer may further include a first thickener, and the oily bonding layer may further include a second thickener. The first thickener is applied to the aqueous bonding layer, and the second thickener is applied to the oily bonding layer, which is conducive to improving the stability of the aqueous bonding layer slurry and the oily bonding layer slurry and preventing components of the aqueous bonding layer slurry and the oily bonding layer slurry from settling. The types of the first thickener and the second thickener are not particularly limited in this application, as long as the objectives of this application can be achieved. For example, the first thickener and the second thickener each are at least one independently selected from hydroxyethyl cellulose, methyl hydroxyethyl cellulose, sodium carboxymethyl cellulose, polyacrylamide, or sodium alginate. The content of the first thickener in the aqueous bonding layer and the content of the second thickener in the oily bonding layer are not particularly limited in this application, and may be selected by a person skilled in the art according to actual needs, as long as the objectives of this application can be achieved. For example, based on a mass of the aqueous bonding layer, a mass percent of the first thickener is 0.3% to 6%. Based on a mass of the oily bonding layer, a mass percent of the second thickener is 0.3% to 6%. The content of the aqueous binder in the aqueous bonding layer and the content of the oily binder in the oily bonding layer are not particularly limited in this application, and may be selected by a person skilled in the art according to actual needs, as long as the objectives of this application can be achieved. For example, based on the mass of the aqueous bonding layer, a mass percent of the aqueous binder is 94% to 99.7%. Based on the mass of the oily bonding layer, a mass percent of the oily binder is 94% to 99.7%.

In some embodiments of this application, a coating weight CW1' of the first ceramic coating layer is 7 mg/cm$^2$ to 13 mg/cm$^2$. For example, the coating weight CW1' of the first ceramic coating layer may be 7 mg/cm$^2$, 7.5 mg/cm$^2$, 8 mg/cm$^2$, 8.5 mg/cm$^2$, 9 mg/cm$^2$, 9.2 mg/cm$^2$, 9.5 mg/cm$^2$, 9.7 mg/cm$^2$, 10 mg/cm$^2$, 10.2 mg/cm$^2$, 10.5 mg/cm$^2$, 10.7 mg/cm$^2$, 11 mg/cm$^2$, 11.2 mg/cm$^2$, 11.5 mg/cm$^2$, 11.7 mg/cm$^2$, 12 mg/cm$^2$, 12.5 mg/cm$^2$, 13 mg/cm$^2$, or a value falling within a range formed by any two thereof. By adjusting and controlling the coating weight CW1' of the first ceramic coating layer within the above range, the first ceramic coating layer can absorb part of the electrolyte solution. By adjusting and controlling the coating weight of the first ceramic coating layer within the above range, it is conducive to increasing the solution retention rate of the first separator, such that the solution storage performance of the first separator is improved, which is conducive to improving the cycle performance of the secondary battery. Moreover, it is conducive to improving the thermal stability and strength of the first separator, improving the mechanical performance of the first separator, and reducing the possibility of large-area contact between the positive electrode plate and the negative electrode plate caused by shrinkage of the first separator during the charging and discharging processes of the secondary battery, and in turn, conducive to improving the safety performance of the secondary battery.

In some embodiments of this application, based on a mass of the first ceramic coating layer, a mass percent C1 of the first ceramic particles is 10% to 50%. For example, the mass percent C1 of the first ceramic particles is 10%, 20%, 25%, 30%, 36%, 42%, 50%, or a value falling within a range formed by any two thereof. By adjusting and controlling the mass percent of the first ceramic particles in the first ceramic coating layer within the above range, the first ceramic particles can sufficiently exert the corresponding functions to obtain the first separator with a good solution storage capacity and infiltration performance. By using the first separator in the secondary battery, it is conducive to allowing the secondary battery to have good cycle performance and achieving the energy density and safety performance of the secondary battery concurrently.

In some embodiments of this application, a coating weight CW2' of the second ceramic coating layer is 7 mg/cm$^2$ to 13 mg/cm$^2$. For example, the coating weight CW2' of the second ceramic coating layer may be 7 mg/cm$^2$, 7.5 mg/cm$^2$, 8 mg/cm$^2$, 8.5 mg/cm$^2$, 9 mg/cm$^2$, 9.2 mg/cm$^2$, 9.5 mg/cm$^2$, 9.7 mg/cm$^2$, 10 mg/cm$^2$, 10.2 mg/cm$^2$, 10.5 mg/cm$^2$, 10.7 mg/cm$^2$, 11 mg/cm$^2$, 11.2 mg/cm$^2$, 11.5 mg/cm$^2$, 11.7 mg/cm$^2$, 12 mg/cm$^2$, 12.5 mg/cm$^2$, 13 mg/cm$^2$, or a value falling within a range formed by any two thereof. By adjusting and controlling the coating weight CW2' of the second ceramic coating layer within the above range, it is conducive to improving the thermal stability and strength of the second separator, improving the mechanical performance of the second separator, and reducing the possibility of large-area contact between the positive electrode plate and the negative electrode plate caused by shrinkage of the second separator during the charging and discharging processes of the secondary battery, and in turn, conducive to improving the safety performance of the secondary battery. Moreover, the second ceramic coating layer can absorb part of the electrolyte solution. By adjusting and controlling the coating weight of the second ceramic coating layer within the above range, it is conducive to increasing the solution retention rate of the second separator, such that the solution storage performance of the second separator is improved, which is conducive to further achieving the cycle performance of the secondary battery concurrently.

In some embodiments of this application, based on a mass of the second ceramic coating layer, a mass percent C2 of the second ceramic particles is 10% to 50%. For example, the mass percent C2 of the second ceramic particles is 10%, 20%, 25%, 30%, 36%, 42%, 50%, or a value falling within a range formed by any two thereof. By adjusting and controlling the mass percent of the second ceramic particles in the second ceramic coating layer within the above range, the second ceramic particles can sufficiently exert the corresponding functions, such that the second separator can take into account the solution storage capacity. By applying the second separator to the secondary battery, it is conducive to allowing the secondary battery to have a high energy density and safety performance and also achieving the cycle performance of the secondary battery concurrently.

In some embodiments of this application, the first ceramic coating layer includes first ceramic particles, and the second ceramic coating layer includes second ceramic particles. The first ceramic particles and the second ceramic particles each independently include one or more selected from the group consisting of aluminum oxide, boehmite, silicon oxide, magnesium oxide, titanium oxide, tin oxide, calcium oxide, zirconium oxide, yttrium oxide, silicon carbide, aluminum hydroxide, magnesium hydroxide and calcium hydroxide. The type of the first ceramic particles in the first ceramic coating layer and the type of the second ceramic particles in the second ceramic coating layer are within the range of this application, which can further improve the solution retention capacity of the first separator and the second separator and alleviate the interface problem of the positive electrode plate and the negative electrode plate caused by insufficient electrolyte solution, thereby further improving the cycle performance of the secondary battery.

In one embodiment of this application, the first ceramic coating layer further includes a first ceramic coating layer binder, and the second ceramic coating layer further includes a second ceramic coating layer binder. The types of the first ceramic coating layer binder and the second ceramic coating layer binder are not particularly limited in this application, as long as the objectives of this application can be achieved. For example, the first ceramic coating layer binder and the second ceramic coating layer binder each are at least one independently selected from styrene-butadiene rubber, Polyvinyl alcohol, polyvinylidene fluoride, polyacrylic acid, polymethyl methacrylate, polybutylacrylate, or polyacrylonitrile. The contents of the first ceramic particles and the first ceramic coating layer binder in the first ceramic coating layer and the contents of the second ceramic particles and the second ceramic coating layer binder in the second ceramic coating layer are not particularly limited in this application, and may be selected by a person skilled in the art according to actual needs, as long as the objectives of this application can be achieved. For example, based on the mass of the first ceramic coating layer, a mass percent of the first ceramic coating layer binder is 50% to 90%. Based on the mass of the second ceramic coating layer, a mass percent of the second ceramic coating layer binder is 50% to 90%.

In some embodiments of this application, a porosity P1 of the first base film is greater than a porosity P2 of the second base film, where $40\% \leq P1 \leq 70\%$, and $5\% \leq P2 \leq 50\%$. In some embodiments of this application, $50\% \leq P1 \leq 60\%$, and $10\% \leq P2 \leq 40\%$. For example, P1 may be 40%, 45%, 50%, 55%, 60%, 65%, 70%, or a value falling within a range formed by any two thereof. For example, P2 may be 5%, 10%, 15%, 20%, 25%, 30%, 35%, 40%, 45%, 50%, or a value falling within a range formed by any two thereof. The first base film has a higher porosity than the second base film, which can further increase the solution retention rate of the first separator, and is thus conducive to alleviating the interface problems of the positive electrode plate and the negative electrode plate caused by an insufficient electrolyte solution, thereby further improving the cycle performance of the secondary battery. Moreover, by adjusting and controlling the porosity P1 of the first base film and the porosity P2 of the second base film within the ranges of this application, the first separator and the second separator have a high mechanical strength, which can further achieve the safety performance of the secondary battery concurrently.

In some embodiments of this application, a pore size D1 of the first base film is greater than a pore size D2 of the second base film, $80\,nm \leq D1 \leq 700\,nm$, and $50\,nm \leq D2 \leq 200\,nm$. In some embodiments of this application, $250\,nm \leq D1 \leq 520\,nm$, and $100\,nm \leq D2 \leq 150\,nm$. For example, D1 may be 80 nm, 100 nm, 200 nm, 300 nm, 400 nm, 500 nm, 600 nm, 700 nm, or a value falling within a range formed by any two thereof. For example, D2 may be 50 nm, 60 nm, 70 nm, 80 nm, 90 nm, 100 nm, 120 nm, 150 nm, 180 nm, 200 nm, or a value falling within a range formed by any two thereof. The first base film has a larger pore size than the second base film, which can increase the solution retention rate of the first separator and improve the transmission of the lithium ions, and is thus conducive to alleviating the interface problems of the positive electrode plate and the negative electrode plate in the curved region caused by an insufficient electrolyte solution, thereby further improving the cycle performance of the secondary battery. Moreover, by adjusting and controlling the pore size D1 of the first base film and the pore size D2 of the second base film within the ranges of this application, the first separator and the second separator have a high mechanical strength, which can further achieve the safety performance of the secondary battery concurrently.

In some embodiments of this application, a thickness of the first separator H1 is in a range of 7.5 μm to 15.0 μm, and a thickness of the second separator H2 is in a range of 6.0 μm to 13.0 μm. For example, the thickness H1 of the first separator may be 7.5 μm, 8.0 μm, 8.5 μm, 9.0 μm, 9.5 μm, 10.0 μm, 10.5 μm, 11.0 μm, 11.5 μm, 12.0 μm, 12.5 μm, 13.0 μm, 13.5 μm, 14.0 μm, 14.5 μm, 15.0 μm, or a value falling within a range formed by any two thereof. For example, the thickness H2 of the first separator may be 6.0 μm, 6.5 μm, 7 μm, 7.5 μm, 8 μm, 8.5 μm, 9 μm, 9.5 μm, 10 μm, 10.5 μm, 11.0 μm, 11.5 μm, 12.0 μm, 12.5 μm, 13.0 μm, or a value falling within a range formed by any two thereof. By adjusting and controlling the thickness H1 of the first separator and the thickness H2 of the second separator within the above ranges, the obtained secondary battery has a high energy density and can also achieve the cycle performance and the safety performance concurrently.

In some embodiments of this application, a thickness h1 of the first base film is 4.5 μm to 8.0 μm, and a thickness

h2 of the second base film is 4.5 μm to 8.0 μm. The types of the first base film and the second base film are not particularly limited in this application, as long as the objectives of this application can be achieved. For example, the materials of the first base film and the second base film may include, but are not limited to, at least one of polyolefins (PO) dominated by polyethylene (PE) and polypropylene (PP), polyester, e.g., a polyethylene terephthalate (PET) film, cellulose, polyimide (PI), polyamide (PA), spandex, or aramid. The types of the first base film and the second base film may include at least one of a woven film, a non-woven film, a microporous film, a composite film, a calendered film, or a spun film.

In this application, first base films with different porosities and pore sizes are commercially available, and by referring to testing methods of "testing the porosity" and "testing the pore size" in this application, a first base film with the required porosity and pore size is selected. Second base films with different porosities and pore sizes are commercially available, and by referring to testing methods of "testing the porosity" and "testing the pore size" in this application, a second base film with the required porosity and pore size is selected.

A preparation method for a first separator is not particularly limited in this application, as long as the objectives of this application can be achieved. For example, the preparation method of the first separator includes, but is not limited to, the following steps: (1) Adding a first binder and a first thickener into deionized water and mixing the solution well to obtain an aqueous bonding layer slurry. (2) Adding first ceramic particles and a first ceramic coating layer binder into deionized water and mixing the solution well to obtain a first ceramic coating layer slurry. (3) Coating one surface of a first base film with the first ceramic coating layer slurry, and performing drying to form a first ceramic coating layer on the surface of the first base film. Then coating a surface that is of the first ceramic coating layer and that is away from the first base film with an aqueous bonding layer slurry, and performing drying to form an aqueous bonding layer on the surface of the first ceramic coating layer. (4) Coating the other surface of the first base film with an aqueous bonding layer slurry, and performing drying to form an aqueous bonding layer on the other surface of the first base film, thus obtaining the first separator. The above solvent is not limited in this application, as long as the objectives of this application can be achieved.

In this application, the coating weight of the first ceramic coating layer may be adjusted and controlled by means known to a person skilled in the art. For example, when coating the surface of the first base film with the first ceramic coating layer slurry, based on the definite solid content of the first ceramic coating layer slurry, increasing the coating amount of the first ceramic coating layer slurry in order to increase the coating weight of the first ceramic coating layer. Conversely, the coating weight of the first ceramic coating layer may be reduced. The coating weight of the aqueous bonding layer may be adjusted and controlled by means known to a person skilled in the art. For example, when coating the aqueous bonding layer slurry, based on the definite solid content of the aqueous bonding layer slurry, increasing the coating amount of the aqueous bonding layer slurry in order to increase the coating weight of the aqueous bonding layer. Conversely, the coating weight of the aqueous bonding layer may be reduced.

A preparation method for a second separator is not particularly limited in this application, as long as the objectives of this application can be achieved. For example, the preparation method of the second separator includes, but is not limited to, the following steps: (1) Adding a second binder and a second thickener into N-methyl-pyrrolidone (NMP) and mixing the solution well to obtain an oily bonding layer slurry. (2) Adding second ceramic particles and a second ceramic coating layer binder into N-methyl-pyrrolidone and mixing the solution well to obtain a second ceramic coating layer slurry. (3) Coating one surface of a second base film with the second ceramic coating layer slurry, and performing drying to form a second ceramic coating layer on the surface of the second base film. Then coating a surface that is of the second ceramic coating layer and that is away from the second base film with an oily bonding layer slurry, and performing drying to form an oily bonding layer on the surface of the second ceramic coating layer. (4) Coating the other surface of the second base film with an oily bonding layer slurry, and performing drying to form an oily bonding layer on the other surface of the second base film, thus obtaining the second separator. The above solvent is not limited in this application, as long as the objectives of this application can be achieved.

In this application, the coating weight of the oily bonding layer may be adjusted and controlled by means known to a person skilled in the art. For example, when coating the surface of the second base film or the second ceramic coating layer with the oily bonding layer slurry, based on the definite solid content of the oily bonding layer slurry, increasing the coating amount of the oily bonding layer slurry in order to increase the coating weight of the oily bonding layer. Conversely, the coating weight of the oily bonding layer may be reduced. The coating weight of the second ceramic coating layer may be adjusted and controlled by means known to a person skilled in the art. For example, when the second ceramic coating layer slurry is coated, based on the definite solid content of the second ceramic coating layer slurry, the coating amount of the second ceramic coating layer slurry is increased in order to increase the coating weight of the second ceramic coating layer. Conversely, the coating weight of the second ceramic coating layer may be reduced.

The negative current collector is not particularly limited in this application, as long as the objectives of this application can be achieved. For example, the negative current collector may include copper foil, copper alloy foil, nickel foil, stainless steel foil, titanium foil, foamed nickel, foamed copper, or a composite current collector. For example, the composite current collector may be a lithium-copper composite current collector, a carbon-copper composite current collector, a nickel-copper composite current collector, a titanium-copper composite current collector, or the like. The thickness of the negative current collector is not particularly limited in this application, as long as the objectives of this application can be achieved. For example, a thickness of the negative current collector is 4 $\mu$m to 15 $\mu$m.

In some embodiments of this application, the first negative electrode material layer and the second negative electrode material layer may each further include a conductive agent and a binder. The types of the conductive agent and the binder are not particularly limited in this application, as long as the objectives of this application can be achieved. For example, the conductive agent may include, but is not limited to, at least one of conductive carbon black (Super P), carbon nanotubes (CNTs), carbon fibers, flake graphite, graphene, a metal material, or a conductive polymer. The conductive carbon black may include, but is not limited to, at least one of acetylene black or Ketjen black. The carbon nanotubes may include, but are not limited to, single-walled carbon nanotubes and/or multi-walled carbon nanotubes. The carbon fibers may include, but are not limited to, vapor grown carbon fibers (VGCF) and/or carbon nanofibers. The metal material may include, but is not limited to, metal powder and/or metal fibers. Specifically, the metal may include, but is not limited to, at least one of copper, nickel, aluminum, or silver. The conductive polymer may include, but is not limited to, at least one of polyphenylene derivatives, polyaniline, polythiophene, polyacetylene, or polypyrrole. For example, the binder may include, but is not limited to, at least one of polyacrylic acid, sodium polyacrylate, potassium polyacrylate, lithium polyacrylate, polyimide, polyvinyl alcohol, carboxymethylcellulose, sodium carboxymethyl cellulose, lithium carboxymethyl cellulose, polyamideimide, styrene-butadiene rubber, or polyvinylidene difluoride. The mass ratio of the negative active materials, the conductive agents and the binders in the first negative electrode material layer and the second negative electrode material layer are not particularly limited in this application, and may be selected by a person skilled in the art according to actual needs, as long as the objectives of this application can be achieved. The thicknesses of the first negative electrode material layer and the second negative electrode material layer are not particularly limited in this application, as long as the objectives of this application can be achieved. For example, the thicknesses of the first negative electrode material layer and the second negative electrode material layer are each independently 30 $\mu$m to 120 $\mu$m.

The positive current collector is not particularly limited herein, as long as the objectives of this application can be achieved. For example, the positive current collector may include aluminum foil, aluminum alloy foil, a composite current collector (for example, an aluminum-carbon composite current collector), or the like.

The positive electrode material layer includes a positive active material. The positive active material is not particularly limited in this application, as long as the objectives of this application can be achieved. For example, the positive active material may include, but is not limited to, at least one of lithium nickel cobalt manganese oxide, e.g., NCM811, NCM622, NCM523, NCM111, lithium nickel cobalt aluminum oxide, lithium iron phosphate, a lithium-rich manganese based material, lithium cobalt oxide ($LiCoO_2$), lithium manganate, lithium manganese iron phosphate, or lithium titanate.

The positive electrode material layer may further include a conductive agent and a binder. The types of the conductive agent and binder are not particularly limited in this application, as long as the objectives of this application can be achieved. For example, the conductive agent and the binder may be at least one of the above conductive agents and binders. The mass percentages of the positive active material, conductive agent, or binder in the positive electrode material layer are not particularly limited herein, and may be selected by a person skilled in the art as actually required, as long as the objectives of this application can be achieved.

The thicknesses of the positive current collector and positive electrode material layer are not particularly limited herein, as long as the objectives of this application can be achieved. For example, the thickness of the positive current collector is 5 $\mu$m to 20 $\mu$m, and the thickness of the positive electrode material layer is 30 $\mu$m to 120 $\mu$m.

In this application, the secondary battery further includes an electrolyte solution. The electrolyte solution includes a lithium salt and a nonaqueous solvent.

The lithium salt is not particularly limited in this application, as long as the objectives of this application can be achieved. For example, the lithium salt may include, but is not limited to, at least one of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $Li_2SiF_6$, lithium bis(oxalate)borate (LiBOB), or lithium difluoroborate. The content of the lithium salt in the electrolyte solution is not particularly limited in this application, as long as the objectives of this application can be achieved.

The nonaqueous solvent is not particularly limited in this application, as long as the objectives of this application can be achieved. For example, the nonaqueous solvent may include, but is not limited to, at least one of a carbonate compound, a carboxylate compound, a ether compound, or other organic solvents. The carbonate compound may include, but is not limited to, at least one of a chain carbonate compound, a cyclic carbonate compound, or a fluorocarbonate compound. The chain carbonate compound may include, but is not limited to, at least one of dimethyl carbonate (DMC), diethyl carbonate (DEC), dipropyl carbonate (DPC), methyl propyl carbonate (MPC), ethylene propyl carbonate (EPC), or methyl ethyl carbonate (MEC). The cyclic carbonate compound may include, but is not limited to, at least one of ethylene carbonate (EC), propylene carbonate (PC), butylene carbonate (BC), or vinyl ethylene carbonate (VEC). The fluorocarbonate compound may include, but is not limited to, at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate. The carboxylate compound may include, but is not limited to, at least one of methyl formate, methyl acetate, ethyl acetate, n-propyl acetate, tert-butyl acetate, methyl propionate, ethyl propionate, propyl propionate, γ-butyrolactone, decalactone, valerolactone, or caprolactone. The ether compound may include, but is not limited to, at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The other organic solvent may include, but is not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate. The content of the nonaqueous solvent in the electrolyte solution is not particularly limited in this application, as long as the objectives of this application can be achieved.

The secondary battery further includes a housing, which is configured to accommodate a positive electrode plate, a separator, a negative electrode plate, an electrolyte solution, and other components known in the field of secondary batteries. Such other components are not limited in this application. The housing is not particularly limited herein, and may be a housing well-known in the art, as long as the objectives of this application can be achieved. For example, the housing may be a hard housing or a flexible housing. The material of the hard housing may be metal. The type of the metal is not limited herein. The hard housing may be a metallic hard housing known in the art as long as the objectives of this application can be achieved. The flexible housing may be a metallic laminated film such as an aluminum laminated film, a steel laminated film.

A preparation process of the secondary battery of this application is well known to a person skilled in the art and is not particularly limited in this application. For example, the preparation process of the secondary battery may include, but is not limited to, the following steps: stacking a positive electrode plate, a first separator, a negative electrode plate, and a second separator in sequence, winding the stacked structure to obtain an electrode assembly of a wound structure, putting the electrode assembly into a housing, injecting an electrolyte solution into the housing, and sealing the housing to obtain the secondary battery. Additionally, an overcurrent prevention element, a guide plate, and the like may also be put into the housing as required, so as to prevent the rise of internal pressure, overcharge, and overdischarge of the secondary battery.

In some embodiments of this application, the secondary battery in this application may include, but is not limited to, a lithium metal secondary battery, a lithium-ion secondary battery, that is, lithium-ion battery, a lithium polymer secondary battery, a lithium-ion polymer secondary battery, or the like. In some embodiments of this application, the secondary battery is a lithium-ion battery.

A second aspect of this application provides an electrical apparatus, including the secondary battery according to any one of the foregoing embodiments. Therefore, the electrical apparatus provided in this application exhibits good use performance.

The type of an electronic apparatus is not particularly limited in this application, and the electronic apparatus may be any electronic apparatus known in the prior art. In some embodiments of this application, the electronic apparatus may include, but is not limited to, a notebook computer, a pen-input computer, a mobile computer, an electronic book player, a portable phone, a portable fax machine, a portable copier, a portable printer, a stereo headset, a video recorder, a liquid crystal television, a hand-held cleaner, a portable CD machine, a mini disc, a transceiver, an electronic organizer, a calculator, a memory card, a portable audio recorder, a radio, a backup power supply, a motor, an automobile, a motorcycle, a power bicycle, a bicycle, a lighting appliance, a toy, a game machine, a clock, an electric tool, a flash light, a camera, a large household storage battery, a lithium-ion capacitor, or the like.

**Embodiment**

The implementations of this application are described below in more detail with reference to embodiments and comparative embodiments. Various tests and evaluations are performed by the following methods. In addition, unless otherwise specified, the word "parts" means parts by mass, and the symbol "%" means a percentage by mass.

**Test methods and devices:**

**Sampling method for first separator and second separator:**

Disassembling lithium-ion batteries in a tested embodiment and an comparative embodiment, taking out a first separator and a second separator, soaking the first separator and the second separator in dimethyl carbonate (DMC) for 20 min to remove an electrolyte solution residue, and then putting the first separator and the second separator in an oven to be dried at 60 °C for 12 h to obtain a first separator sample and a second separator sample. Unless otherwise specified, all of the following tests use the above method to obtain the first separator and the second separator.

**Sampling method of first base film and second base film:**

Respectively putting the above first separator and second separator obtained by sampling into a container, adding N-methyl-pyrrolidone (NMP), putting an ultrasonic instrument with a heating function for ultrasonication, controlling the temperature at 45 °C, and performing ultrasonication for 3 h. After the first separator and the second separator become fully transparent, taking out the first separator and the second separator to obtain a first base film and a second base film. Unless otherwise specified, all of the following tests use the above method to obtain the first base film and the second base film.

**Testing porosities of the first base film and the second base film:**

Using a gas replacement method to perform testing, using a mold to respectively die-cut the first base film and the second base film to prepare samples, where selecting, by a person skilled in the art, a mold with a common size and shape according to elements of an object to be tested, such as a size, a shape, and requirements of a testing device; and using a true density meter to test a true volume $V_0$ of each sample. An apparent volume V of the sample may be obtained by calculating a measured area and thickness of the sample, and then a mass percent of a pore volume of the sample to a total area P = (V - $V_0$) / V x 100%. That is, obtaining the porosity of the first base film or the second base film.

**Testing pore sizes of the first base film and the second base film:**

The specific steps are as follows:

(1) Completely wetting and filling pore channels of a base film to be tested with anhydrous ethanol so that a positive pressure is formed in the pore channels due to a capillary phenomenon;
(2) Putting the base film into a hermetic tank, pressurizing the tank with a gas to extrude liquid out from the capillary pore channels; and
(3) Obtaining the pore size of the separator by using the Laplace Equation with reference to a relative relationship between a pore channel diameter d and a pressure $\Delta P$ applied when liquid in a single pore channel is completely extruded out from the capillary pore channel. The Laplace Equation is shown in the following formula:

$$d = -4\gamma cos\theta/\Delta P \times 100\%$$

In the formula, d represents the pore channel diameter, that is, the pore size, $\Delta P$ represents a pressure, $\gamma$ represents a surface tension of the anhydrous ethanol, and $\theta$ represents a contact angle between the separator and the anhydrous ethanol. At different pressures, liquid in the base film will be successively extruded out and generates a certain gas penetration flow rate. The size of the pore size and the pore size distribution may be calculated according to the relationship between pressure and flow rate changes. The above base film is the first base film or the second base film.

**Testing thicknesses of the first separator and the second separator:**

Performing argon ion polishing on the first separator to obtain a section of the first separator, observing the morphology of the section of the first separator along a thickness direction by means of a field emission scanning electron microscope (Philips XL-30), and shooting a scanning electron microscope image, and obtaining a thickness H1 of the first separator by means of the scanning electron microscope. By replacing first separator with the second separator, measuring the thickness H2 of the second separator.

**Testing a capacity retention rate:**

Using a battery performance tester (Brand: NEWARE; Model No.: CT-4008W-5V6A-80CH) to perform charging at a constant current of 4 A with a charge rate of 1 C until the voltage reaches a full-charge voltage of 4.5 V, then performing charging at a constant voltage of 4.5 V until the current reaches a cutoff current of 200 mA and 0.05C, standing for 10 min, and then discharging at a constant current of 2A and 0.5 C until the voltage reaches 3 V, and standing for 10 min. The process is recorded as one cycle, and in this case, there will be a discharge capacity at the end of one cycle. Then repeating charging and discharging. A discharge capacity at the end of the first discharge is a first-cycle discharge capacity.

Capacity retention rate (%) = (1000th - cycle discharge capacity/first-cycle discharge capacity) $\times$ 100%.

**Extrusion** test:

In an environment of 25 °C, charging lithium-ion batteries at a current of 2 C until the voltage reaches 4.5 V, and then charging the lithium-ion batteries at the voltage of 4.5 V until the current reaches 0.02 C. In a testing environment of 20 $\pm$5 °C, putting the lithium-ion batteries on a test board, with front sides of five lithium-ion batteries facing up and reverse sides of another five lithium-ion batteries facing up, where along a thickness direction of a lithium-ion battery, one side of the lithium-ion battery serves as a front side, and the other side of the lithium-ion battery serves as a reverse side. Using a round bar with a diameter of 6 mm to perform testing at a position that is of a lithium-ion battery sample main body and that is away from a top sealing portion by 12 mm at a falling speed of 300 N/min and an extrusion force of 2000 N, where judgment standards are no firing and no explosion, which are considered to pass the extrusion test. Testing 10 lithium-ion batteries in each group, and recording "number of passages/10" as a final result.

**Embodiment 1-1**

<Preparing a first separator>

Using a polyethylene (PE) film with a thickness h1 = 5 $\mu$m as a first base film, where a porosity P1 of the first base film is 55% and a pore size D1 of the first base film is 380 nm.

Mixing aqueous polyvinylidene difluoride (aqueous PVDF, Mw = $8.3 \times 10^6$) and sodium carboxymethyl cellulose (Mw = $8 \times 10^5$) as a first thickener at a mass ratio of 98.5: 1.5, adding deionized water as a solvent, and stirring the solution well to form an aqueous bonding layer slurry in which the solid content is 75 wt%.

Coating one surface of the first base film with the aqueous bonding layer slurry, and performing drying at 60 °C to form an aqueous bonding layer on one surface of the first base film. Coating an aqueous bonding layer slurry on the other surface of the first base film, and performing drying at 60 °C to form an aqueous bonding layer on the other surface of the first base film to prepare a first separator. Based on a mass of a first ceramic coating layer, a mass percent C1 of the first ceramic is 30%, a coating weight CW1' of the first ceramic coating layer is 9 mg/cm$^2$, and a coating weight CW1 of the aqueous bonding layer is 0.0006 mg/mm$^2$.

<Preparing a second separator>

Using a polyethylene (PE) film with a thickness h2 = 5 $\mu$m as a second base film, where a porosity P2 of the second base film is 28% and a pore size D2 of the second base film is 120 nm.

Mixing an oily binder PVDF5130 (Mw = $8.3 \times 10^6$) and sodium carboxymethyl cellulose (Mw = $8 \times 10^5$) as a second thickener at a mass ratio of 98.5: 1.5, adding N-methyl-pyrrolidone (NMP) as a solvent, and stirring the solution well to form an oily bonding layer slurry in which the solid content is 75 wt%.

Coating one surface of the second base film with the oily bonding layer slurry, and performing drying at 60 °C to form an oily bonding layer on one surface of the second base film. Coating an oily bonding layer slurry on the other surface of the second base film, and performing drying at 60 °C to form an oily bonding layer on the other surface of the second base film to prepare a second separator. Based on a mass of a second ceramic coating layer, a mass percent C2 of the second ceramic is 30%, a coating weight CW2 of the oily bonding layer is 0.0006 mg/mm$^2$, and a coating weight CW2' of the second ceramic coating layer is 9 mg/cm$^2$.

<Preparing a negative electrode plate>

Mixing artificial graphite as a negative active material, styrene-butadiene rubber and sodium carboxymethyl cellulose at a mass ratio of 97.4: 1.2: 1.4, then adding deionized water as a solvent, and stirring the solution well to obtain a first negative electrode slurry in which the solid content is 70 wt%. In addition, the first negative electrode slurry may also be used as a second negative electrode slurry. Coating one surface of 6-$\mu$m thick negative current collector copper foil with the first negative electrode slurry, and performing drying at 90 °C to obtain a negative electrode plate in which a coating thickness of the first negative electrode material layer is 45 $\mu$m. Coating the other surface of the negative current collector copper foil with the second negative electrode slurry, performing drying to obtain a second negative electrode material layer coated on the surface, where a thickness of the second negative electrode material layer is 45 $\mu$m, and then obtaining a negative electrode plate with a total thickness of 96 $\mu$m. Performing cold calendering on the coated negative electrode plate, and then cutting the same into a size of 74 mm $\times$ 824 mm for use. A compaction density of the first negative electrode material layer is 1.745 g/cm$^3$ and a length thereof is 730 mm. A compaction density of the second negative electrode material layer is 1.745 g/cm$^3$ and a length thereof is 670 mm. One end of the first negative electrode material layer is flush with one end of the second negative electrode material layer, and the other end of the first negative electrode material layer is longer than the other end of the second negative electrode material layer, where the other ends are winding beginning ends of the electrode assembly.

<Preparing a positive electrode plate>

Mixing lithium cobalt oxide as a positive active material, conductive carbon black as a conductive agent, and polyvinylidene fluoride as a positive electrode binder at a mass ratio of 94: 3: 3, adding N-methyl-pyrrolidone (NMP) as a solvent, and stirring the solution well to formulate a positive electrode slurry in which the solid content is 75 wt%. In addition, the first negative electrode slurry may also be used as a second negative electrode slurry. Coating one surface of 10-$\mu$m thick positive current collector aluminum foil with the positive electrode slurry, and performing drying at 90 °C to obtain a positive electrode plate coated with a 50-$\mu$m thick first positive electrode material layer on a single side. Coating the other surface of the positive current collector aluminum foil with the positive electrode slurry, and performing drying to obtain a second positive electrode material layer coated on the surface, a thickness of the second positive electrode material layer is 50 $\mu$m, and then obtaining a positive electrode plate with a total thickness of 110 $\mu$m. Performing cold calendering on the coated positive electrode plate, and then cutting the same into a size of 70 mm $\times$ 800 mm for use. Compaction densities of the first positive electrode material layer and the second positive electrode material layer are 4.2 g/cm$^3$.

<Preparing an electrolyte solution>

In a glove box inflated with a dry argon atmosphere, mixing propylene carbonate (PC), diethyl carbonate (DEC), and ethylene carbonate (EC) at a mass ratio of 1.2: 1.4: 1 to obtain a basic solvent, then adding a lithium salt of lithium hexafluorophosphate (LiPF$_6$) into the above basic solvent for dissolving, and mixing the solution well to obtain an electrolyte solution. Based on a mass of the electrolyte solution, a mass percent of LiPF6 is 12%, and the balance is the basic solvent.

<Preparing a lithium-ion battery>

Stacking the above prepared positive electrode plate, first separator, negative electrode plate, and second separator in sequence, and then winding the stacked structure to obtain the electrode assembly. A positive tab is led out by aluminum tab spot welding, and a negative tab is led out by nickel tab spot welding. The first negative electrode material layer is close to the first separator, the second negative electrode material layer is close to the second separator, and the first positive electrode material layer is close to the first separator and is adjacent to the aqueous bonding layer, where reference may be made to FIG. 2 for the specific structure. Putting the electrode assembly into an aluminum laminated film, drying the electrode assembly in a vacuum oven of 80 °C for 12 h for dehydrating, and then injecting the above prepared electrolyte solution. Performing steps such as vacuum sealing, standing, chemical formation, where charging at a constant current of 0.02 C until the voltage reaches 3.5 V, and then discharging at a constant current of 0.1 C until the voltage reaches 3.9 V, and shaping to obtain a lithium-ion battery.

### Embodiment 1-2 to Embodiment 1-8

Identical to Embodiment 1-1 except that related data are adjusted according to Table 1.

### Embodiment 1-9

Identical to Embodiment 1-1 except that the first separator, the second separator, and the lithium-ion battery are prepared according to the following steps:

<Preparing a first separator>

Using a polyimide microporous film with a thickness h1 = 5 $\mu$m as a first base film, where the porosity P1 of the first base film is 55% and the pore size D1 of the first base film is 380 nm.
Mixing aqueous polyvinylidene difluoride (aqueous PVDF, Mw = 8.3 $\times$ 106) and sodium carboxymethyl cellulose (Mw = 8 $\times$ 105) as a first thickener at a mass ratio of 98.5: 1.5, adding deionized water as a solvent, and stirring the solution well to form an aqueous bonding layer slurry in which the solid content is 75 wt%.
Mixing aluminum oxide (Al$_2$O$_3$) as the first ceramic particles and styrene-butadiene rubber (Mw = 7 $\times$ 10$^6$) as the first ceramic coating layer binder at a mass ratio of 3: 7, adding deionized water as a solvent, and stirring the solution well to obtain a first ceramic coating layer slurry in which the solid content is 45 wt%.
Coating one surface of the first base film with the first ceramic coating layer slurry, and performing drying at 60 °C to form a first ceramic coating layer on the surface of the first base film. Coating the other surface that is of the first ceramic coating layer and that is away from the first base film with an aqueous bonding layer slurry, and performing drying at 60 °C to form an aqueous bonding layer on the surface of the first ceramic coating layer. Coating an aqueous bonding layer slurry on the other surface of the first base film, and performing drying at 60 °C to form an aqueous bonding layer on the other surface of the first base film to prepare a first separator. Based on a mass of a first ceramic coating layer, a mass percent C1 of the first ceramic is 30%, a coating weight CW1' of the first ceramic coating layer is 9 mg/cm2, and a coating weight CW1 of the aqueous bonding layer is 0.0006 mg/mm2.

<Preparing a second separator>

Using a polyethylene microporous film with a thickness h2 = 5 $\mu$m as a second base film, where the porosity P2 of the second base film is P2 of 28% and the pore size D2 of the second base film is 120 nm.

Mixing an oily binder PVDF5130 (Mw = 8.3 $\times$ 106) and sodium carboxymethyl cellulose (Mw = 8 $\times$ 105) as a second thickener at a mass ratio of 98.5: 1.5, adding N-methyl-pyrrolidone (NMP) as a solvent, and stirring the solution well to form an oily bonding layer slurry in which the solid content is 75 wt%.

Mixing aluminum oxide ($Al_2O_3$) as the second ceramic particles and styrene-butadiene rubber (Mw = 7 $\times$ 10$^6$) as the second ceramic coating layer binder at a mass ratio of 3: 7, adding deionized water as a solvent, and stirring the solution well to obtain a second ceramic coating layer slurry in which the solid content is 45 wt%.

Coating one surface of the second base film with the oily bonding layer slurry, and performing drying at 60 °C to form an oily bonding layer on one surface of the second base film. Coating the other surface of the second base film with the second ceramic coating layer slurry, and performing drying at 60 °C to form a second ceramic coating layer on the other surface of the second base film. Coating the surface of second ceramic coating layer with the oily bonding layer slurry, and performing drying at 60 °C to form an oily bonding layer on a surface that is of the second ceramic coating layer and that is away from the second base film to prepare a second separator. Based on a mass of the second ceramic coating layer, a mass percent C2 of the second ceramic is 30%, a coating weight CW2 of the oily bonding layer is 0.0006 mg/mm$^2$, and a coating weight CW2' of the second ceramic coating layer is 7 mg/cm$^2$.

<Preparing a lithium-ion battery>

Stacking the above prepared positive electrode plate, first separator, negative electrode plate, and second separator in sequence, and then winding the stacked structure to obtain the electrode assembly. A positive tab is led out by aluminum tab spot welding, and a negative tab is led out by nickel tab spot welding. The first negative electrode material layer is close to the first separator, and the first ceramic coating layer is provided on a side that is of the first base film and that is away from the first negative electrode material layer. The second negative electrode material layer is close to the second separator, the second ceramic coating layer is provided on a side that is of the second base film and that is away from the second negative electrode material layer, and first positive electrode material layer is close to the first separator and is adjacent to the aqueous bonding layer, where reference may be made to FIG. 3 for the specific structure. Putting the electrode assembly into an aluminum laminated film, drying the electrode assembly in a vacuum oven of 80 °C for 12 h for dehydrating, and then injecting the above prepared electrolyte solution. Performing steps such as vacuum sealing, standing, chemical formation, where charging at a constant current of 0.02 C until the voltage reaches 3.5 V, and then discharging at a constant current of 0.1 C until the voltage reaches 3.9 V, and shaping to obtain a lithium-ion battery.

**Embodiment 1-10 to Embodiment 1-23**

Identical to Embodiment 1-9 except that related data are adjusted according to Table 1.

**Embodiment 2-1 to Embodiment 2-14**

Identical to Embodiment 1-1 except that the relevant preparation parameters are adjusted according to Table 2.

**Embodiment 2-15 to Embodiment 2-17**

Identical to Embodiment 1-10 except that the relevant preparation parameters are adjusted according to Table 2.

**Embodiment 3-1 to Embodiment 3-15**

Identical to Embodiment 1-1 except that the relevant preparation parameters are adjusted according to Table 3.

**Embodiment 3-16 to Embodiment 3-18**

Identical to Embodiment 1-10 except that the relevant preparation parameters are adjusted according to Table 3.

**Comparative Embodiment** 1

Identical to Embodiment 1-1 except that the second separator is replaced with the first separator.

**Comparative Embodiment 2**

Identical to Embodiment 1-1 except that the first separator is replaced with the second separator.

**Comparative Embodiment 3**

Identical to Embodiment 1-1 except that the positions of the first separator and the second separator are exchanged.
The preparation parameters and performance parameters of the embodiments and the comparative embodiments are shown in Table 1 to Table 3.

Table 1

| | Aqueous binder | Oily binder | CW1 (mg/mm$^2$) | CW2 (mg/mm$^2$) | CW1' (mg/cm$^2$) | CW2' (mg/cm$^2$) | H1 ($\mu$m) | H2 ($\mu$m) | Extrusion test | Capacity retention rate (%) |
|---|---|---|---|---|---|---|---|---|---|---|
| Embodiment 1-1 | Aqueous PVDF | PVDF5130 | 0.0006 | 0.0006 | / | / | 4.25 | 4.25 | 6/10 | 95.56 |
| Embodiment 1-2 | Aqueous PVDF | PVDF5130 | 0.0004 | 0.0004 | / | / | 4.23 | 4.23 | 5/10 | 95.63 |
| Embodiment 1-3 | Aqueous PVDF | PVDF5130 | 0.0008 | 0.0008 | / | / | 4.27 | 4.27 | 8/10 | 95.23 |
| Embodiment 1-4 | Aqueous PVDF | PVDF5130 | 0.001 | 0.001 | / | / | 4.3 | 4.3 | 9/10 | 94.88 |
| Embodiment 1-5 | Aqueous PVDF | PVDF5130 | 0.0015 | 0.0015 | / | / | 4.34 | 4.34 | 9/10 | 94.12 |
| Embodiment 1-6 | Aqueous PVDF | PVDF5130 | 0.002 | 0.002 | / | / | 4.4 | 4.4 | 10/10 | 93.89 |
| Embodiment 1-7 | Aqueous PVDF | PVDF5130 | 0.0002 | 0.0002 | / | / | 4.21 | 4.21 | 4/10 | 96.75 |
| Embodiment 1-8 | Aqueous PVDF | PVDF5130 | 0.0025 | 0.0025 | / | / | 4.45 | 4.45 | 10/10 | 92.11 |
| Embodiment 1-9 | Aqueous PVDF | PVDF5130 | 0.0006 | 0.0006 | 7 | 7 | 5.65 | 5.65 | 8/10 | 96.23 |
| Embodiment 1-10 | Aqueous PVDF | PVDF5130 | 0.0006 | 0.0006 | 9 | 9 | 5.85 | 5.85 | 9/10 | 96.45 |
| Embodiment 1-11 | Aqueous PVDF | PVDF5130 | 0.0006 | 0.0006 | 13 | 13 | 6.55 | 6.55 | 10/10 | 96.89 |
| Embodiment 1-12 | Aqueous PVDF | PVDF5130 | 0.0006 | 0.0006 | 5 | 5 | 5.05 | 5.05 | 7/10 | 96.03 |
| Embodiment 1-13 | Aqueous PVDF | PVDF5130 | 0.0006 | 0.0006 | 15 | 15 | 6.75 | 6.75 | 10/10 | 97.09 |
| Embodiment 1-14 | Aqueous PVDF | PVDF5130 | 0.0004 | 0.0004 | 9 | 9 | 5.83 | 5.83 | 8/10 | 96.56 |

| | Aqueous binder | Oily binder | CW1 (mg/mm$^2$) | CW2 (mg/mm$^2$) | CW1' (mg/cm$^2$) | CW2' (mg/cm$^2$) | H1 ($\mu$m) | H2 ($\mu$m) | Extrusion test | Capacity retention rate (%) |
|---|---|---|---|---|---|---|---|---|---|---|
| Embodiment 1-15 | Aqueous PVDF | PVDF5130 | 0.0008 | 0.0008 | 9 | 9 | 5.87 | 5.87 | 10/10 | 96.23 |
| Embodiment 1-16 | Aqueous PVDF | PVDF5130 | 0.001 | 0.001 | 9 | 9 | 5.9 | 5.9 | 10/10 | 96.00 |
| Embodiment 1-17 | Aqueous PVDF | PVDF5130 | 0.0015 | 0.0015 | 9 | 9 | 5.94 | 5.94 | 10/10 | 95.88 |
| Embodiment 1-18 | Aqueous PVDF | PVDF5130 | 0.002 | 0.002 | 9 | 9 | 6 | 6 | 10/10 | 94.00 |
| Embodiment 1-19 | Aqueous PVDF | PVDF5130 | 0.0002 | 0.0002 | 9 | 9 | 5.81 | 5.81 | 5/10 | 96.98 |
| Embodiment 1-20 | Aqueous PVDF | PVDF5130 | 0.0025 | 0.0025 | 9 | 9 | 6.05 | 6.05 | 10/10 | 93.13 |
| Embodiment 1-21 | Polytetrafluoroethylene | Polyvinylidene fluoride | 0.0006 | 0.0006 | 9 | 9 | 5.85 | 5.85 | 10/10 | 96.12 |
| Embodiment 1-22 | Styrene-butadiene rubber | Polyvinylidene fluoride-hexafluoropropylene copolymer | 0.0006 | 0.0006 | 9 | 9 | 5.85 | 5.85 | 10/10 | 95.53 |
| Embodiment 1-23 | Aqueous poly(styrene-co-acrylate) | PVDF5130 | 0.0006 | 0.0006 | 9 | 9 | 5.85 | 5.85 | 10/10 | 95.34 |
| Comparative Embodiment 1 | Aqueous PVDF | / | 0.0006 | 0.0006 | / | / | 4.25 | 4.25 | 0/10 | 98.85 |
| Comparative Embodiment 2 | / | PVDF5130 | 0.0006 | 0.0006 | / | / | 4.25 | 4.25 | 6/10 | 91.12 |
| Comparative Embodiment 3 | Aqueous PVDF | PVDF5130 | 0.0006 | 0.0006 | / | / | 4.25 | 4.25 | 6/10 | 93.23 |

Note: "/" in Table 1 represents no corresponding parameter.

As can be seen from Embodiment 1-1 to Embodiment 1-23 and Comparative Embodiment 1 to Comparative Embodiment 3, the negative electrode plate is provided between the first separator and the second separator, and the first separator is adjacent to the positive electrode plate. The first separator includes an aqueous bonding layer, and the second separator includes an oily bonding layer. By using the first separator and the second separator in conjunction, the lithium-ion battery can have both a high extrusion test passing rate and a high capacity retention rate, which indicates that the cycle performance and safety performance of the lithium-ion battery are achieved concurrently. In Comparative Embodiment 1, both of the two separators are first separators. Each first separator includes an aqueous bonding layer. The lithium-ion battery has good cycle performance but poor safety performance. In Comparative Embodiment 2, both of the two separators are second separators. Each second separator includes an oily bonding layer. The lithium-ion battery has good safety performance but poor cycle performance. In Comparative Embodiment 3, the positions of the first separator and the second separator are exchanged. The lithium-ion battery has good safety performance but poor cycle performance. That is, in Comparative Embodiment 1 to Comparative Embodiment 3, the cycle performance and safety performance of the lithium-ion battery cannot be achieved concurrently. Whereas, in Embodiment 1-1 to Embodiment 1-23, both the cycle performance and the safety performance of the lithium-ion battery are good, which indicates that the cycle performance and the safety performance of the lithium-ion battery are achieved concurrently.

The coating weight of the aqueous bonding layer in the first separator and the coating weight of the oily bonding layer in the second separator usually affect the cycle performance and safety performance of the lithium-ion battery. As can be seen from Embodiment 1-1 to Embodiment 1-8, by adjusting and controlling the coating weight of the aqueous bonding layer in the first separator and the coating weight of the oily bonding layer in the second separator with in the ranges of this application, the lithium-ion battery has a high extrusion test passing rate and capacity retention rate, which indicates that the cycle performance and safety performance of the lithium-ion battery are achieved concurrently.

The introduction of the first ceramic coating layer in the first separator and the second ceramic coating layer in the second separator usually affects the cycle performance and safety performance of the lithium-ion battery. As can be seen from Embodiment 1-1 to Embodiment 1-8, Embodiment 1-10, and Embodiment 1-14 to Embodiment 1-20, the introduction of the first ceramic coating layer and the second ceramic coating layer can further improve the capacity retention rate and safety performance of the lithium-ion battery, thereby indicating that the cycle performance and safety performance of the lithium-ion battery are better achieved concurrently.

The coating weight of the first ceramic coating layer in the first separator and the coating weight of the second ceramic coating layer in the second separator usually affect the cycle performance of the lithium-ion battery. As can be seen from Embodiment 1-9 to Embodiment 1-13, the coating weights of the first ceramic coating layer and the second ceramic coating layer are within the ranges of this application, the lithium-ion battery has a high extrusion test passing rate and capacity retention rate, which indicates that the cycle performance and safety performance of the lithium-ion battery are achieved concurrently.

Th types of the aqueous binder and the oily binder usually affect the cycle performance of the lithium-ion battery. As can be seen from Embodiment 1-10, and Embodiment 1-21 to Embodiment 1-23, the types of the aqueous binder and the oily binder are within the ranges of this application, the lithium-ion battery has a high extrusion test passing rate and capacity retention rate, which indicates that the cycle performance and safety performance of the lithium-ion battery are achieved concurrently.

Table 2

|  | P1(%) | P2(%) | P1 is greater than P2 | Extrusion test | Capacity retention rate (%) |
|---|---|---|---|---|---|
| Embodiment 1-1 | 55 | 28 | Yes | 6/10 | 95.56 |
| Embodiment 1-10 | 55 | 28 | Yes | 9/10 | 96.45 |
| Embodiment 2-1 | 40 | 28 | Yes | 8/10 | 94.23 |
| Embodiment 2-2 | 50 | 28 | Yes | 7/10 | 94.87 |
| Embodiment 2-3 | 60 | 28 | Yes | 6/10 | 96.12 |
| Embodiment 2-4 | 70 | 28 | Yes | 5/10 | 96.54 |
| Embodiment 2-5 | 30 | 28 | Yes | 9/10 | 93.45 |
| Embodiment 2-6 | 80 | 28 | Yes | 5/10 | 97.12 |
| Embodiment 2-7 | 60 | 5 | Yes | 9/10 | 94.56 |
| Embodiment 2-8 | 60 | 10 | Yes | 8/10 | 95.32 |
| Embodiment 2-9 | 60 | 25 | Yes | 6/10 | 96.01 |

(continued)

|  | P1(%) | P2(%) | P1 is greater than P2 | Extrusion test | Capacity retention rate (%) |
|---|---|---|---|---|---|
| Embodiment 2-10 | 60 | 40 | Yes | 5/10 | 96.45 |
| Embodiment 2-11 | 60 | 50 | Yes | 5/10 | 96.76 |
| Embodiment 2-12 | 60 | 3 | Yes | 10/10 | 93.78 |
| Embodiment 2-13 | 60 | 60 | No | 4/10 | 97.56 |
| Embodiment 2-14 | 40 | 50 | No | 6/10 | 93.99 |
| Embodiment 2-15 | 40 | 25 | Yes | 10/10 | 95.12 |
| Embodiment 2-16 | 55 | 50 | Yes | 8/10 | 97.83 |
| Embodiment 2-17 | 70 | 5 | Yes | 8/10 | 95.12 |

The porosity of the first base film and the porosity of the second base film usually affect the cycle performance and safety performance of the lithium-ion battery, but have basically no effect on the energy density of the lithium-ion battery. As can be seen from Embodiment 1-1, and Embodiment 2-1 to Embodiment 2-14, by adjusting and controlling the porosity of the first base film and the porosity of the second base film within the ranges of this application and satisfying that the porosity of the first base film is greater than the porosity of the second base film, the lithium-ion battery has a high extrusion test passing rate and capacity retention rate, which indicates that the cycle performance and safety performance of the lithium-ion battery are achieved concurrently.

As can be seen from Embodiment 1-10, and Embodiment 2-15 to Embodiment 2-17, by adjusting and controlling the porosity of the first base film and the porosity of the second base film within the ranges of this application and satisfying that the porosity of the first base film is greater the porosity of the second base film, the cycle performance and safety performance of the lithium-ion battery can be achieved concurrently.

Table 3

|  | D1(nm) | D2(nm) | D1 is greater than D2 | Extrusion test | Capacity retention rate (%) |
|---|---|---|---|---|---|
| Embodiment 1-1 | 380 | 120 | Yes | 6/10 | 95.56 |
| Embodiment 1-10 | 380 | 120 | Yes | 9/10 | 96.45 |
| Embodiment 3-1 | 80 | 60 | Yes | 10/10 | 93.32 |
| Embodiment 3-2 | 160 | 120 | Yes | 9/10 | 93.56 |
| Embodiment 3-3 | 250 | 120 | Yes | 8/10 | 94.32 |
| Embodiment 3-4 | 520 | 120 | Yes | 5/10 | 96.45 |
| Embodiment 3-5 | 700 | 120 | Yes | 4/10 | 97.43 |
| Embodiment 3-6 | 70 | 120 | No | 10/10 | 93.25 |
| Embodiment 3-7 | 720 | 120 | Yes | 3/10 | 97.89 |
| Embodiment 3-8 | 380 | 50 | Yes | 10/10 | 94.33 |
| Embodiment 3-9 | 380 | 80 | Yes | 9/10 | 94.89 |
| Embodiment 3-10 | 380 | 100 | Yes | 8/10 | 95.12 |
| Embodiment 3-11 | 380 | 150 | Yes | 6/10 | 95.45 |
| Embodiment 3-12 | 380 | 200 | Yes | 5/10 | 95.89 |
| Embodiment 3-13 | 380 | 40 | Yes | 10/10 | 93.82 |
| Embodiment 3-14 | 380 | 220 | Yes | 4/10 | 96.23 |
| Embodiment 3-15 | 80 | 120 | No | 9/10 | 93.42 |
| Embodiment 3-16 | 80 | 70 | Yes | 10/10 | 95.25 |
| Embodiment 3-17 | 380 | 200 | Yes | 8/10 | 97.45 |
| Embodiment 3-18 | 700 | 50 | Yes | 7/10 | 96.32 |

The pore size of the first base film and the pore size of the second base film usually affect the cycle performance and safety performance of the lithium-ion battery, but have basically no effect on the energy density of the lithium-ion battery. As can be seen from Embodiment 1-1, and Embodiment 3-1 to Embodiment 3-15, by adjusting and controlling the pore size of the first base film and the pore size of the second base film within the ranges of this application and satisfying that the pore size of the first base film is greater than the pore size of the second base film, the lithium-ion battery has a high extrusion test passing rate and capacity retention rate, which indicates that the cycle performance and safety performance of the lithium-ion battery are achieved concurrently.

As can be seen from Embodiment 1-10, and Embodiment 3-16 to Embodiment 3-18, by adjusting and controlling the pore size of the first base film and the pore size of the second base film within the ranges of this application and satisfying that the pore size of the first base film is greater the pore size of the second base film, the cycle performance and safety performance of the lithium-ion battery can be achieved concurrently.

What is described above is merely exemplary embodiments of this application, but is not intended to limit this application. Any modifications, equivalent replacements, improvements, and the like made without departing from the spirit and principles of this application still fall within the protection scope of this application.

**Claims**

1. A secondary battery, comprising an electrode assembly (100) of a wound structure; the electrode assembly (100) comprising a positive electrode plate (40), a negative electrode plate (30), a first separator (10), and a second separator (20), wherein the negative electrode plate (30) is provided between the first separator (10) and the second separator (20); **characterized in that**,

   the negative electrode plate (30) comprises a negative current collector (31), a first negative electrode material layer (32), and a second negative electrode material layer (33); the first negative electrode material layer (32) and the second negative electrode material layer (33) are provided on two sides of the negative current collector (31) in a thickness direction of the negative current collector (31), the first separator (10) is adjacent to the first negative electrode material layer (32), and the second separator (20) is adjacent to the second negative electrode material layer (33);
   the first separator (10) comprises a first base film (11) and an aqueous bonding layer (12), the aqueous bonding layer (12) being provided on at least one side of the first base film (11), and the aqueous bonding layer (12) is in direct contact with the first negative electrode material layer (32); and
   the second separator (20) comprises a second base film (21) and an oily bonding layer (22), the oily bonding layer (22) being provided on at least one side of the second base film (21), and the oily bonding layer (22) is in direct contact with the second negative electrode material layer (33).

2. The secondary battery according to claim 1, **characterized in that**, the aqueous bonding layer (12) is provided on two sides of the first base film (11), the first separator (10) further comprises a first ceramic coating layer (13), the first ceramic coating layer (13) being provided on a side of the first base film (11) that is oriented away from the first negative electrode material layer (32), and the first ceramic coating layer (13) being provided between the first base film (11) and the aqueous bonding layer (12); and/or,
   the oily bonding layer (22) is provided on two sides of the second base film (21), the second separator (20) further comprises a second ceramic coating layer (23), the second ceramic coating layer (23) being provided on a side of the second base film (21) that is oriented away from the second negative electrode material layer (33), and the second ceramic coating layer (23) being provided between the second base film (21) and the oily bonding layer (22).

3. The secondary battery according to claim 1, **characterized in that**, along a winding direction (W) of the electrode assembly (100), a length of the first negative electrode material layer (32) is greater than a length of the second negative electrode material layer (33).

4. The secondary battery according to claim 1, **characterized in that**, the electrode assembly (100) comprises a straight region (102) and a curved region (101); at the curved region (101), a curved segment of the positive electrode plate (40) is adjacent to a curved segment of the first negative electrode material layer (32), the curved segment of the positive electrode plate (40) is farther away from a winding center of the electrode assembly (100) than the curved segment of the first negative electrode material layer (32), and the first separator (10) is provided between the curved segment of the positive electrode plate (40) and the curved segment of the first negative electrode material layer (32).

5. The secondary battery according to claim 1, **characterized in that**, the aqueous bonding layer (12) comprises one or more selected from the group consisting of aqueous polyvinylidene difluoride, polytetrafluoroethylene, styrene-butadiene rubber and aqueous poly(styrene-co-acrylate); and/or, the oily bonding layer (22) comprises one or more selected from the group consisting of oily polyvinylidene difluoride, polyvinylidene fluoride and a polyvinylidene fluoride-hexafluoropropylene copolymer.

6. The secondary battery according to claim 1, **characterized in that**, a coating weight CW1 of the aqueous bonding layer (12) is 0.0004 mg/mm$^2$ to 0.002 mg/mm$^2$, and/or, a coating weight CW2 of the oily bonding layer (22) is 0.0004 mg/mm$^2$ to 0.002 mg/mm$^2$.

7. The secondary battery according to any one of claims 1 to 6, **characterized in that**, a porosity P1 of the first base film (11) is greater than a porosity P2 of the second base film (21), $40\% \leq P1 \leq 70\%$, and $5\% \leq P2 \leq 50\%$.

8. The secondary battery according to claim 7, **characterized in that**, $50\% \leq P1 \leq 60\%$, and $10\% \leq P2 \leq 40\%$.

9. The secondary battery according to any one of claims 1 to 6, **characterized in that**, a pore size D1 of the first base film (11) is greater than a pore size D2 of the second base film (21), $80\ nm \leq D1 \leq 700\ nm$, and $50\ nm \leq D2 \leq 200\ nm$.

10. The secondary battery according to claim 9, **characterized in that**, $250\ nm \leq D1 \leq 520\ nm$, and $100\ nm \leq D2 \leq 150\ nm$.

11. The secondary battery according to claim 2, **characterized in that**, a coating weight CW1' of the first ceramic coating layer (13) is 7 mg/cm$^2$ to 13 mg/cm$^2$, and/or, a coating weight CW2' of the second ceramic coating layer (23) is 7 mg/cm$^2$ to 13 mg/cm$^2$.

12. The secondary battery according to claim 2, **characterized in that**, the first ceramic coating layer (13) comprises first ceramic particles, the second ceramic coating layer (23) comprises second ceramic particles, the first ceramic particles and the second ceramic particles each independently comprising one or more selected from the group consisting of aluminum oxide, boehmite, silicon oxide, magnesium oxide, titanium oxide, tin oxide, calcium oxide, zirconium oxide, yttrium oxide, silicon carbide, aluminum hydroxide, magnesium hydroxide and calcium hydroxide.

13. The secondary battery according to any one of claims 1 to 6, **characterized in that**, a thickness of the first separator (10) H1 is in a range of 7.5 μm to 15.0 μm, and a thickness of the second separator (20) H2 is in a range of 6.0 μm to 13.0 μm.

14. The secondary battery according to claim 2, **characterized in that**, a coating weight CW1 of the aqueous bonding layer (12) and a coating weight CW1' of the first ceramic coating layer (13) is 7.04 mg/cm$^2$ to 13.2 mg/cm$^2$, and/or, a coating weight CW2 of the oily bonding layer (22) and a coating weight CW2' of the second ceramic coating layer (23) is 7.04 mg/cm$^2$ to 13.2 mg/cm$^2$.

15. An electrical apparatus, comprising the secondary battery according to any one of claims 1 to 14.

FIG. 1

FIG. 2

FIG. 3

FIG. 4

Europäisches
Patentamt
European
Patent Office
Office européen
des brevets

# EUROPEAN SEARCH REPORT

**Application Number**

EP 25 19 8945

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 977 014 A (NINGDE AMPEREX TECHNOLOGY LTD) 3 May 2024 (2024-05-03) * paragraphs [0024] - [0151]; figures 1-3 * ----- | 1-15 | INV. H01M10/0587 H01M10/0525 H01M50/434 H01M50/449 |
| X | CN 118 040 086 A (DONGGUAN AMPEREX TECH LTD) 14 May 2024 (2024-05-14) * paragraphs [0025] - [0118]; figures 1-4 * ----- | 1-15 | H01M50/451 H01M50/457 H01M50/46 H01M50/491 |

**TECHNICAL FIELDS SEARCHED (IPC)**

H01M

The present search report has been drawn up for all claims

| Place of search | Date of completion of the search | Examiner |
|---|---|---|
| Munich | 29 January 2026 | Tsipouridis, P |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 19 8945

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2026

| Patent document cited in search report | | Publication date | Patent family member(s) | | Publication date |
|---|---|---|---|---|---|
| CN 117977014 | A | 03-05-2024 | CN | 117977014 A | 03-05-2024 |
| | | | EP | 4618219 A1 | 17-09-2025 |
| | | | US | 2025286220 A1 | 11-09-2025 |
| CN 118040086 | A | 14-05-2024 | CN | 118040086 A | 14-05-2024 |
| | | | US | 2025286215 A1 | 11-09-2025 |

EPO FORM P0459

For more details about this annex : see Official Journal of the European Patent Office, No. 12/82